# EUROPEAN PATENT APPLICATION

(11) **EP 4 365 273 A1**
(43) Date of publication of application: **08.05.2024**
(21) Application number: 22832519.7
(22) Date of filing: 25.03.2022
(51) Int. Cl.: C12G 3/04

(54) **WHISKY HIGHBALL BEVERAGE AND METHOD FOR MANUFACTURING SAME**

(30) Priority: 28.06.2021 JP 2021106984
(71) Applicant: Asahi Group Holdings, Ltd., Tokyo 130-8602 (JP); Asahi Breweries, Ltd., Tokyo 130-8602 (JP)
(72) Inventor: TANAKA Yoshihisa, Moriya-shi, Ibaraki 302-0106 (JP)
(74) Representative: J A Kemp LLP
(86) International application number: PCT/JP2022/014495
(87) International publication number: WO 2023/276358

(57) **Abstract**

The present invention provides a technique that can improve the balance between a peat flavor and other whisky flavors in a low-ethanol concentration whisky highball beverage.

Provided is a whisky highball beverage containing a heavy peat whisky and a non-peat whisky, wherein the ethanol concentration is 4% by volume or less.

## Description

### Technical Field

The present invention relates to a whisky highball beverage and a method for producing the same.

### Background Art

A whisky highball beverage is a carbonated beverage containing whisky. Whisky highball beverages are also sold as packaged ready-to-drink (RTD) products.

Regarding whisky highball beverages, for example, Patent Literature 1 (Japanese Patent Application Publication No. 2020-188743) discloses a packaged carbonated alcohol beverage having a carbon dioxide pressure of 3.0 to 3.5 gas volumes and containing 5 to 50 mL/L of a whisky in terms of alcohol at 100%.

### Citation List

### Patent Literature

Patent Literature 1: Japanese Patent Application Publication No. 2020-188743

### Summary of Invention

Some whiskies have an aroma called a peat aroma. The peat aroma is an aroma of peat smoke. Examples of the whisky with a peat aroma include Scotch whisky and the like. The present inventors are planning to provide a whisky highball drink by using a whisky with a peat aroma.

Meanwhile, in recent years, there has been a demand for beverages with a reduced alcohol content (ethanol concentration) from the viewpoint of appropriate drinking. For this reason, the present inventors are planning to provide a whisky highball beverage having a low ethanol concentration by using a whisky with a peat aroma.

However, it has been found that when the ethanol concentration is reduced, the peat aroma is more strongly felt than the other whisky aroma, and the aroma balance is impaired.

Therefore, an object of the present invention is to provide a technique capable of improving the balance between the peat aroma and the other whisky aroma in a whisky highball beverage with a low ethanol concentration.

As a result of earnest studies, the present inventors have found that the above object can be achieved by using a combination of a whisky with a strong peat aroma and a whisky with a weak peat aroma. Specifically, the present invention provides the followings.
[1] A whisky highball beverage comprising:
   a heavily peated whisky in which a concentration of phenol contained is 0.10 mg/L or more, a concentration of guaiacol contained is 0.05 mg/L or more, and a concentration of o-cresol contained is 0.05 mg/L or more in terms of an ethanol concentration at 40 vol%; and
   a non-peated whisky in which a concentration of phenol contained is less than 0.1 mg/L, a concentration of guaiacol contained is less than 0.05 mg/L, and a concentration of o-cresol contained is less than 0.05 mg/L in terms of the ethanol concentration at 40 vol%, wherein
   an ethanol concentration is 4 vol% or less.
[2] The whisky highball beverage according to [1], wherein a content of the heavily peated whisky is 0.01 to 20.0 vol% in terms of the ethanol concentration at 40 vol%.
[3] The whisky highball beverage according to [1] or [2], wherein a content of the non-peated whisky is 0.01 to 15.0 vol% in terms of the ethanol concentration at 40 vol%.
[4] The whisky highball beverage according to any one of [1] to [3], wherein a guaiacol concentration is 0.5 to 100.0 µg/L.
[5] The whisky highball beverage according to any one of [1] to [4], wherein a phenol concentration is 1.0 to 200.0 µg/L.
[6] The whisky highball beverage according to any one of [1] to [5], wherein an o-cresol concentration is 0.5 to 150.0 µg/L.
[7] The whisky highball beverage according to any one of [1] to [7], wherein
   a value of NP/HP/Alc is 0.1 to 40, where "NP" denotes a content (vol%) of the non-peated whisky in terms of the ethanol concentration at 40 vol%, "HP" denotes a content (vol%) of the heavily peated whisky in terms of the ethanol concentration at 40 vol%, and "Alc" denotes the ethanol concentration (vol%) of the beverage.
[8] A method for producing a whisky highball beverage, comprising:
   preparing a heavily peated whisky in which a concentration of phenol contained is 0.10 mg/L or more, a concentration of guaiacol contained is 0.05 mg/L or more, and a concentration of o-cresol contained is 0.05 mg/L or more in terms of an ethanol concentration at 40 vol%;
   preparing a non-peated whisky in which a concentration of phenol contained is less than 0.1 mg/L, a concentration of guaiacol contained is less than 0.05 mg/L, and a concentration of o-cresol contained is less than 0.05 mg/L in terms of the ethanol concentration at 40 vol%; and
   mixing the heavily peated whisky and the non-peated whisky and diluting the obtained mixture so that an ethanol concentration is 4 vol% or less.
   According to the present invention, provided is a technique capable of improving the balance between the peat aroma and the other whisky aroma in a whisky highball beverage with a low ethanol concentration.

### Description of Embodiments

Hereinafter, embodiments of the present invention will be described in detail.

An embodiment relates to a whisky highball beverage. The "whisky highball beverage" is a carbonated beverage containing a whisky.

In the present specification, the definition of "whisky" follows the provisions of the Liquor Tax Law of Japan in effect as of the filing date.

The whisky used in the present embodiment is preferably a whisky obtained by saccharifying germinated grains and water as raw materials and distilling the fermented alcohol-containing product (limited to the alcohol-containing product whose alcohol content at the time of distillation is less than 95 degrees), and/or a whisky obtained by saccharifying grains with germinated grains and water and distilling the fermented alcohol-containing product (limited to the alcohol-containing product whose alcohol content at the time of distillation is less than 95 degrees).

The beverage according to the present embodiment contains a heavily peated whisky and a non-peated whisky and has an ethanol concentration of 4 vol% or less.

The "heavily peated whisky" means a whisky in which a concentration of phenol contained is 0.1 mg/L or more, a concentration of guaiacol contained is 0.05 mg/L or more, and a concentration of o-cresol contained is 0.05 mg/L or more in terms of an ethanol concentration at 40 vol%.

The heavily peated whisky is preferably a whisky in which the concentration of phenol contained is 1.0 mg/L or more, the concentration of guaiacol contained is 0.5 mg/L or more, and the concentration of o-cresol contained is 0.5 mg/L or more in terms of the ethanol concentration at 40 vol%.

Here, a value "in terms of the ethanol concentration at 40 vol%" means a value in a case of using a converted ethanol-containing liquid obtained by concentrating or diluting an original ethanol-containing liquid so that the converted ethanol-containing liquid has an ethanol concentration of 40 vol%.

The heavily peated whisky is a whisky with a strong peat aroma. As described above, the peat aroma is a smoke aroma derived from peat. There is a certain demand for whiskies with a moderate peat aroma. Therefore, it is considered that there is also a demand for whisky highball beverages with a moderate strength of peat aroma.

The content of the heavily peated whisky in terms of the ethanol concentration at 40 vol% is, for example, 0.01 to 20.0 vol%, preferably 0.07 to 15.0 vol%, and more preferably 0.1 to 7.0 vol%. When the content of the heavily peated whisky is within the above range, the taste is not too weak and the peat aroma is not too strong.

The "non-peated whisky " means a whisky in which the concentration of phenol contained is less than 0.1 mg/L, the concentration of guaiacol contained is less than 0.05 mg/L, and the concentration of o-cresol contained is less than 0.05 mg/L in terms of the ethanol concentration at 40 vol%.

The non-peated whisky has no peat aroma. Addition of the non-peated whisky to the heavily peated whisky makes it possible to obtain a beverage in which the peat aroma is kept from being prominent and is well-balanced with the other whisky aroma.

The content of the non-peated whisky in terms of the ethanol concentration at 40 vol% is, for example, 0.01 to 15.00 vol%, preferably 0.10 to 10.00 vol%, and more preferably 0.20 to 8.00 vol% .

Here, the whisky highball beverage may contain a whisky other than the non-peated whisky and the heavily peated whisky.

The total content of the whiskies in the whisky highball beverage in terms of the ethanol concentration at 40 vol% is, for example, 0.1 to 15.0 vol%, preferably 0.5 to 10.0 vol%, and more preferably 0.7 to 9.0 vol%.

The guaiacol concentration in the whisky highball beverage is, for example, 0.5 to 100.0 µg/L, preferably 0.5 to 60.0 µg/L, and more preferably 1.0 to 50.0 µg/L.

The phenol concentration in the whisky highball beverage is, for example, 1.0 to 300.0 µg/L, preferably 1.0 to 200.0 µg/L, and more preferably 2.0 to 150.0 µg/L.

The o-cresol concentration in the whisky highball beverage is, for example, 0.5 to 150.0 µg/L, preferably 1.0 to 100.0 µg/L, and more preferably 2.0 to 90.0 µg/L.

As described above, the ethanol concentration in the whisky highball beverage is 4.0 vol% or less. In a whisky highball beverage with such an ethanol concentration, the peat aroma tends to be prominently felt. However, according to the present invention, the use of the non-peated whisky in addition to the heavily peated whisky makes it possible to avoid the prominence of the peat aroma and thereby obtain a whisky highball beverage with the aromas well-balanced.

The ethanol concentration in the whisky highball beverage is preferably 0.1 to 4.0 vol% and more preferably 0.3 to 4.0 vol%.

In a preferred embodiment, a whisky highball beverage has a value of NP/HP/Alc of 0.1 to 40.

Here, "NP" denotes a content (vol%) of the non-peated whisky in terms of the ethanol concentration at 40 vol%.

"HP" denotes a content (vol%) of the heavily peated whisky in terms of the ethanol concentration at 40 vol%.

"Alc" denotes an ethanol concentration (vol%) in the beverage.

When the value of NP/HP/Alc is within the range of 0.1 to 40, a well-balanced beverage can be obtained. The value of NP/HP/Alc is preferably 0.1 to 30 and more preferably 0.1 to 20.

The whisky highball beverage may contain ingredients other than the foregoing ingredients as needed. Examples of the other ingredients include spirits, sugars, dietary fibers, acidulants, sweeteners, fruit juices, extracts, coloring agents, inorganic salts, flavors, and so on.

A method for producing a whisky highball beverage according to the present embodiment includes a step of preparing a heavily peated whisky, a step of preparing a non-peated whisky, and a step of mixing the heavily peated whisky and the non-peated whisky and diluting the obtained mixture so that an ethanol concentration is 4 vol% or less.

For example, the non-peated whisky and the heavily peated whisky are mixed with other ingredients as needed and the concentration is adjusted with carbonated water. The ethanol concentration may be adjusted by adding an alcohol source such as a raw material alcohol. In this way, the whisky highball beverage according to the present embodiment can be obtained. Here, it is also possible to use normal water instead of the carbonated water and then carbonate the obtained mixture afterward.

### Examples

Hereinafter, Examples will be described in order to describe the present invention in more details. However, the present invention should not be interpreted by being limited to Examples described below.

A heavily peated whisky with an ethanol concentration of 54 vol% and a non-peated whisky with an ethanol concentration of 46 vol% were prepared.

In each of the whiskies, the guaiacol concentration, the phenol concentration, and the o-cresol concentration were measured according to the method described in the following literature:
"V. Mall and P. Schieberle, Sex, Smoke, and Spirits: The Role of Chemistry, 9, 107-116."

Specifically, the measurement was conducted in accordance with the following procedure.

### <Measurement Method>

Known amounts of isotope-labeled internal standards (commercial product: Sigma-Aldrich) were added to a whisky sample, followed by distillation using a solvent assisted flavor evaporator (SAFE).

The distillate was extracted with diethyl ether, washed with a saline solution to remove ethanol from the organic layer, concentrated with a Vigreux column, and further micro-distilled to a volume of about 0.2 mL.

The concentrated distillate was subjected to HRGC-ion trap MS (CI method) using methanol as a reaction gas.

The molecular ions derived from the phenol derivatives (guaiacol, phenol, and o-cresol) and their respective labeled standards were quantified by monitoring.
Table 1 presents the concentrations of the ingredients in each of the whiskies. Table 1 also presents the concentrations of the ingredients in the whisky in terms of the ethanol concentration at 40 vol%.

### [Table 1]

**Table 1**

| | Heavily Peated Whisky | Heavily Peated Whisky (in terms of Alc. 40%) | Non-Peated Whisky | Non-Peated Whisky (in terms of Alc. 40%) |
|---|---|---|---|---|
| Guaiacol | 1.09 mg/L | 0.81 mg/L | 0.02 mg/L | 0.02 mg/L |
| Phenol | 3.41 mg/L | 2.53 mg/L | 0.04 mg/L | 0.03 mg/L |
| o-Cresol | 2.29 mg/L | 1.70 mg/L | tr. (Under Lower Limit of Quantification) | tr. (Under Lower Limit of Quantification) |

### Test 1: Examination on Concentration of Heavily Peated Whisky

Whisky highball beverages in Reference Examples 1 to 7 were prepared according to the compositions specified in Table 2. Specifically, the heavily peated whisky was diluted with carbonated water so that the concentration specified in Table 2 was obtained, and the whisky highball beverages in Reference Examples 1 to 7 different in the dilution factor were obtained.

Each of the prepared whisky highball beverages was evaluated by sensory evaluation in terms of a whisky aroma, a peat aroma, and a balance (balance between the peat aroma and the whisky aroma).

Each item was evaluated according to the following 5-grade criteria, using Reference Example 1 as a control.

### (Sensory Evaluation Score)

5: Stronger (or better) than the control
4: Slightly stronger (or slightly better) than the control
3: Equivalent to the control
2: Slightly weaker (or slightly weaker) than the control
1: Weaker (or weaker) than the control

Table 2 presents the results. As presented in Table 2, when the content of the heavily peated whisky was reduced, the whisky aroma strength and the peat aroma strength were both reduced. However, the reduction degree of the peat aroma strength was smaller than that of the whisky aroma strength. In Reference Examples 6 and 7 in which the content of the heavily peated whisky in terms of the ethanol at 40 vol% was 5 vol% or less, the balance between the whisky aroma and the peat aroma was impaired.

### [Table 2]

**Table 2**

| | Unit | Ref. Ex. 1 | Ref. Ex. 2 | Ref. Ex. 3 | Ref. Ex. 4 | Ref. Ex. 5 | Ref. Ex. 6 | Ref. Ex. 7 |
|---|---|---|---|---|---|---|---|---|
| Unblended Heavily Peated Whisky (Alc 54%) | mL/L | 120.0 | 100.0 | 80.0 | 60.0 | 40.0 | 20.0 | 10.0 |
| Heavily Peated Whisky (in terms of Alc. 40%) | vol% | 16.20 | 13.50 | 10.80 | 8.10 | 5.40 | 2.70 | 1.35 |
| Alcohol (Ethanol) | vol% | 6.48 | 5.40 | 4.32 | 3.24 | 2.16 | 1.08 | 0.54 |
| Guaiacol | µg/L | 130.8 | 109.0 | 87.2 | 65.4 | 43.6 | 21.8 | 10.9 |
| Phenol | µg/L | 409.2 | 341.0 | 272.8 | 204.6 | 136.4 | 68.2 | 34.1 |
| o-Cresol | µg/L | 274.8 | 229.0 | 183.2 | 137.4 | 91.6 | 45.8 | 22.9 |
| Whisky Aroma | | - | 3.0 | 2.8 | 2.6 | 2.4 | 1.8 | 1.0 |
| Peat Aroma | | - | 3.0 | 2.8 | 2.8 | 2.8 | 2.6 | 2.2 |
| Balance | | - | 3.0 | 3.0 | 3.0 | 3.0 | 2.4 | 1.2 |

### Test 2: Examination on Ethanol Concentration

Whisky highball beverages in Reference Examples 7 to 12 were prepared according to the compositions specified in Table 3. Specifically, the heavily peated whisky was mixed with a raw material alcohol and carbonated water so that the concentration and the ethanol concentration specified in Table 3 were obtained.

Each of the prepared whisky highball beverages was evaluated by sensory evaluation using the same criteria as in Test 1 in terms of the whisky aroma, the peat aroma, and the balance (balance between the peat aroma and the whisky aroma).

In addition, an alcohol taste was also evaluated with 5-grade scores using Reference Example 7 as a control. The higher the score, the stronger the alcohol taste.

Table 3 presents the results. Reference Examples 7 to 12 have the same content of the heavily peated whisky and are different in the ethanol concentration. As presented in Table 3, it is seen that the peat aroma strength was reduced with an increase in the ethanol concentration. In other words, when the ethanol concentration was reduced, the peat aroma tended to be felt more strongly than the whisky aroma, and accordingly the balance was impaired. On the other hand, when the ethanol concentration was increased, the beverage gave a stronger alcohol taste although the balance was improved. In order to obtain the balance between the whisky aroma and the peat aroma equivalent to that in Reference Example 1, the ethanol concentration of 3% was needed (see Reference Example 10).

### [Table 3]

**Table 3**

| | Unit | Ref. Ex. 7 | Ref. Ex. 8 | Ref. Ex. 9 | Ref. Ex. 10 | Ref. Ex. 11 | Ref. Ex. 12 |
|---|---|---|---|---|---|---|---|
| Raw Material Alcohol (Alc 95%) | mL/L | 0.0 | 4.8 | 15.4 | 25.9 | 36.4 | 46.9 |
| Unblended Heavily Peated Whisky (Alc 54%) | mL/L | 10.0 | 10.0 | 10.0 | 10.0 | 10.0 | 10.0 |
| Heavily Peated Whisky Factor (in terms of Alc. 40%) | vol% | 1.35 | 1.35 | 1.35 | 1.35 | 1.35 | 1.35 |
| Alcohol (Ethanol) | vol% | 0.54 | 1.00 | 2.00 | 3.00 | 4.00 | 5.00 |
| Guaiacol | µg/L | 10.90 | 10.90 | 10.90 | 10.90 | 10.90 | 10.90 |
| Phenol | µg/L | 34.10 | 34.10 | 34.10 | 34.10 | 34.10 | 34.10 |
| o-Cresol | µg/L | 22.90 | 22.90 | 22.90 | 22.90 | 22.90 | 22.90 |
| Whisky Aroma | | 1.0 | 1.0 | 1.0 | 1.0 | 1.0 | 1.0 |
| Peat Aroma | | 2.2 | 1.8 | 1.2 | 1.0 | 1.0 | 1.0 |
| Balance | | 1.2 | 1.8 | 2.8 | 3.0 | 3.0 | 3.0 |
| Alcohol Taste | | - | 3.0 | 4.0 | 4.0 | 5.0 | 5.0 |

### Test 3: Examination on Non-Peated Whisky (Ethanol Concentration of 0.54 vol%)

Whisky highball beverages in Comparative Example 1 and Examples 1 to 6 were prepared according to the compositions specified in Table 4. Here, Comparative Example 1 is the same as Reference Example 7. Specifically, the heavily peated whisky, the non-peated whisky, and carbonated water were mixed so that the concentrations specified in Table 4 were obtained.

Each of the prepared whisky highball beverages was evaluated by sensory evaluation in the same manner as in Test 2 in terms of the whisky aroma, the peat aroma, the balance, and the alcohol taste. Here, Comparative Example 1 was used as a control.

Table 4 presents the results. Comparative Example 1 and Examples 1 to 6 have the same ethanol concentration (0.54 vol%), and are different in the contents of the non-peated whisky and the heavily peated whisky. When the content of the non-peated whisky was increased, only the peat aroma strength tended to be reduced while the whisky aroma strength and the alcohol taste remained nearly unchanged, and the balance between the whisky aroma and the peat aroma tended to be improved.

However, in Example 6 in which the content of the heavily peated whisky was 0.07% in terms of the ethanol concentration at 40% and NP/HP/Alc. was 34.13, the peat aroma tended to be too weak. From this viewpoint, Examples 1 to 5 achieved the better balance than Example 6 did.

### [Table 4]

**Table 4**

| | Unit | Comp. Ex. 1 | Example 1 | Example 2 | Example 3 | Example 4 | Example 5 | Example 6 |
|---|---|---|---|---|---|---|---|---|
| Unblended Non-Peated Whisky (Alc 46%) | mL/L | 0.0 | 2.4 | 4.8 | 7.1 | 9.4 | 10.5 | 11.2 |
| Unblended Heavily Peated Whisky (Alc 54%) | mL/L | 10.0 | 8.0 | 6.0 | 4.0 | 2.0 | 1.0 | 0.5 |
| Non-Peated Whisky (in terms of Alc. 40%) (NP) | vol% | 0.00 | 0.28 | 0.55 | 0.82 | 1.08 | 1.21 | 1.29 |
| Heavily Peated Whisky (in terms of Alc. 40%) (HP) | vol% | 1.35 | 1.08 | 0.81 | 0.54 | 0.27 | 0.14 | 0.07 |
| Alcohol (Ethanol) (Alc.) | vol% | 0.54 | 0.54 | 0.54 | 0.54 | 0.54 | 0.54 | 0.54 |
| NP/HP/Alc. | | 0.0 | 0.48 | 1.29 | 2.81 | 7.41 | 16.00 | 34.13 |
| Guaiacol | µg/L | 10.90 | 8.77 | 6.64 | 4.50 | 2.37 | 1.30 | 0.77 |
| Phenol | µg/L | 34.10 | 27.38 | 20.65 | 13.92 | 7.20 | 3.83 | 2.15 |
| o-Cresol | µg/L | 22.90 | 18.32 | 13.74 | 9.16 | 4.58 | 2.29 | 1.15 |
| Whisky Aroma | | - | 3.0 | 3.0 | 3.0 | 3.0 | 3.0 | 3.0 |
| Peat Aroma | | - | 3.0 | 3.0 | 2.8 | 2.2 | 2.0 | 1.0 |
| Balance | | - | 3.8 | 4.0 | 4.2 | 4.8 | 4.8 | 3.2 |
| Alcohol Taste | | - | 3.0 | 3.0 | 3.0 | 3.0 | 3.0 | 3.0 |

### Test 4: Examination on Non-Peated Whisky (Ethanol Concentration of 1.08 vol%)

Whisky highball beverages in Comparative Example 2 and Examples 7 to 11 were prepared according to the compositions specified in Table 5 in the same manner as in Test 3. To be more specific, the beverages in Comparative Example 2 and Examples 7 to 11 were prepared which had an ethanol concentration of 1.08 vol% and which were different in the contents of the non-peated whisky and the heavily peated whisky.

Each of the prepared whisky highball beverages was evaluated by sensory evaluation in the same manner as in Test 2 in terms of the whisky aroma, the peat aroma, the balance, and the alcohol taste. Here, Comparative Example 2 was used as a control.

Table 5 presents the results. As presented in Table 5, also in the case where the ethanol concentration was 1.08 vol%, when the content of the non-peated whisky was increased, only the peat aroma strength tended to be reduced while the whisky aroma strength and the alcohol taste remained nearly unchanged, and the balance between the whisky aroma and the peat aroma tended to be improved.

### [Table 5]

**Table 5**

| | Unit | Comp. Ex. 2 | Example 7 | Example 8 | Example 9 | Example 10 | Example 11 |
|---|---|---|---|---|---|---|---|
| Unblended Non-Peated Whisky (Alc 46%) | mL/L | 0.0 | 5.8 | 11.7 | 17.6 | 22.3 | 22.9 |
| Unblended Heavily Peated Whisky (Alc 54%) | mL/L | 20.0 | 15.0 | 10.0 | 5.0 | 1.0 | 0.5 |
| Non-Peated Whisky (in terms of Alc. 40%) (NP) | vol% | 0.00 | 0.67 | 1.35 | 2.02 | 2.56 | 2.63 |
| Heavily Peated Whisky (in terms of Alc. 40%) (HP) | vol% | 2.70 | 2.03 | 1.35 | 0.68 | 0.14 | 0.07 |
| Alcohol (Ethanol) (Alc.) | vol% | 1.08 | 1.08 | 1.08 | 1.08 | 1.08 | 1.08 |
| NP/HP/Alc. | | 0.0 | 0.31 | 0.92 | 2.75 | 16.94 | 34.79 |
| Guaiacol | µg/L | 21.80 | 16.47 | 11.13 | 5.80 | 1.54 | 1.00 |
| Phenol | µg/L | 68.20 | 51.38 | 34.57 | 17.75 | 4.30 | 2.62 |
| o-Cresol | µg/L | 45.80 | 34.35 | 22.90 | 11.45 | 2.29 | 1.15 |
| Whisky Aroma | | - | 3.0 | 3.0 | 3.0 | 3.0 | 3.0 |
| Peat Aroma | | - | 3.0 | 3.0 | 2.4 | 2.0 | 1.0 |
| Balance | | - | 4.0 | 4.2 | 4.8 | 4.8 | 3.2 |
| Alcohol Taste | | - | 3.0 | 3.0 | 3.0 | 3.0 | 3.0 |

### Test 5: Examination on Non-Peated Whisky (Ethanol Concentration of 2.16 vol%)

Whisky highball beverages in Comparative Example 3 and Examples 12 to 17 were prepared according to the compositions specified in Table 6 in the same manner as in Tests 3 and 4. To be more specific, the beverages were prepared which had an ethanol concentration of 2.16 vol% and which were different in the contents of the non-peated whisky and the heavily peated whisky.

Each of the prepared whisky highball beverages was evaluated by sensory evaluation in the same manner as in Test 2 in terms of the whisky aroma, the peat aroma, the balance, and the alcohol taste. Here, Comparative Example 3 was used as a control.

Table 6 presents the results. As presented in Table 6, also in the case where the ethanol concentration was 2.16 vol%, when the content of the non-peated whisky was increased, only the peat aroma strength tended to be reduced while the whisky aroma strength and the alcohol taste remained nearly unchanged, and the balance between the whisky aroma and the peat aroma tended to be improved.

### [Table 6]

**Table 6**

| | Unit | Comp. Ex. 3 | Example 12 | Example 13 | Example 14 | Example 15 | Example 16 | Example 17 |
|---|---|---|---|---|---|---|---|---|
| Unblended Non-Peated Whisky (Alc 46%) | mL/L | 0.0 | 11.8 | 23.5 | 35.2 | 41.0 | 45.8 | 46.3 |
| Unblended Heavily Peated Whisky (Alc 54%) | mL/L | 40.0 | 30.0 | 20.0 | 10.0 | 5.0 | 1.0 | 0.5 |
| Non-Peated Whisky (in terms of Alc. 40%) (NP) | vol% | 0.00 | 1.36 | 2.70 | 4.05 | 4.72 | 5.27 | 5.32 |
| Heavily Peated Whisky (in terms of Alc. 40%) (HP) | vol% | 5.40 | 4.05 | 2.70 | 1.35 | 0.68 | 0.14 | 0.07 |
| Alcohol (Ethanol) (Alc.) | vol% | 2.16 | 2.16 | 2.16 | 2.16 | 2.16 | 2.16 | 2.16 |
| NP/HP/Alc. | | 0.0 | 0.16 | 0.46 | 1.39 | 3.21 | 17.43 | 35.19 |
| Guaiacol | µg/L | 43.60 | 32.94 | 22.27 | 11.60 | 6.27 | 2.01 | 1.47 |
| Phenol | µg/L | 136.40 | 102.77 | 69.14 | 35.51 | 18.69 | 5.24 | 3.56 |
| o-Cresol | µg/L | 91.60 | 68.70 | 45.80 | 22.90 | 11.45 | 2.29 | 1.15 |
| Whisky Aroma | | - | 3.0 | 3.0 | 3.0 | 3.0 | 3.0 | 3.0 |
| Peat Aroma | | - | 3.0 | 3.0 | 2.8 | 2.2 | 2.0 | 1.0 |
| Balance | | - | 3.8 | 4.0 | 4.2 | 4.8 | 4.8 | 3.4 |
| Alcohol Taste | | - | 3.0 | 3.0 | 3.0 | 3.0 | 3.0 | 3.0 |

### Text 6: Examination on Non-Peated Whisky (Ethanol Concentration of 3.24 vol%)

Whisky highball beverages in Comparative Example 4 and Examples 18 to 21 were prepared according to the compositions specified in Table 7 in the same manner as in Tests 3 to 5. To be more specific, the beverages were prepared which had an ethanol concentration of 3.24 vol% and which were different in the contents of the non-peated whisky and the heavily peated whisky.

Each of the prepared whisky highball beverages was evaluated by sensory evaluation in the same manner as in Test 2 in terms of the whisky aroma, the peat aroma, the balance, and the alcohol taste. Here, Comparative Example 4 was used as a control.

Table 7 presents the results. As presented in Table 7, also in the case where the ethanol concentration was 3.24 vol%, when the content of the non-peated whisky was increased, only the peat aroma strength tended to be reduced while the whisky aroma strength and the alcohol taste remained nearly unchanged, and the balance between the whisky aroma and the peat aroma tended to be improved.

### [Table 7]

**Table 7**

| | Unit | Comp. Ex. 4 | Example 18 | Example 19 | Example 20 | Example 21 |
|---|---|---|---|---|---|---|
| Unblended Non-Peated Whisky (Alc 46%) | mL/L | 0.0 | 25.8 | 43.0 | 51.6 | 64.5 |
| Unblended Heavily Peated Whisky (Alc 54%) | mL/L | 60.0 | 38.0 | 23.3 | 16.0 | 5.0 |
| Non-Peated Whisky (in terms of Alc. 40%) (NP) | vol% | 0.00 | 2.97 | 4.95 | 5.93 | 7.42 |
| Heavily Peated Whisky (in terms of Alc. 40%) (HP) | vol% | 8.10 | 5.13 | 3.15 | 2.16 | 0.68 |
| Alcohol (Ethanol) (Alc.) | vol% | 3.24 | 3.24 | 3.24 | 3.24 | 3.24 |
| NP/HP/Alc. | | 0.0 | 0.18 | 0.49 | 0.85 | 3.37 |
| Guaiacol | µg/L | 65.40 | 41.94 | 26.29 | 18.47 | 6.74 |
| Phenol | µg/L | 204.60 | 130.61 | 81.28 | 56.62 | 19.63 |
| o-Cresol | µg/L | 137.40 | 87.02 | 53.43 | 36.64 | 11.45 |
| Whisky Aroma | | - | 3.0 | 3.0 | 3.0 | 3.0 |
| Peat Aroma | | - | 3.0 | 3.0 | 2.6 | 2.4 |
| Balance | | - | 4.2 | 4.2 | 4.4 | 5.0 |
| Alcohol Taste | | - | 3.0 | 3.0 | 3.0 | 3.0 |

## Claims

1. A whisky highball beverage comprising:
a heavily peated whisky in which a concentration of phenol contained is 0.1 mg/L or more, a concentration of guaiacol contained is 0.05 mg/L or more, and a concentration of o-cresol contained is 0.05 mg/L or more in terms of an ethanol concentration at 40 vol%; and
a non-peated whisky in which a concentration of phenol contained is less than 0.1 mg/L, a concentration of guaiacol contained is less than 0.05 mg/L, and a concentration of o-cresol contained is less than 0.05 mg/L in terms of the ethanol concentration at 40 vol%, wherein
an ethanol concentration is 4 vol% or less.

2. The whisky highball beverage according to claim 1, wherein a content of the heavily peated whisky is 0.01 to 20.0 vol% in terms of the ethanol concentration at 40 vol%.

3. The whisky highball beverage according to claim 1 or 2, wherein a content of the non-peated whisky is 0.01 to 15.0 vol% in terms of the ethanol concentration at 40 vol%.

4. The whisky highball beverage according to any one of claims 1 to 3, wherein a guaiacol concentration is 0.5 to 100.0 µg/L.

5. The whisky highball beverage according to any one of claims 1 to 4, wherein a phenol concentration is 1.0 to 100.0 µg/L.

6. The whisky highball beverage according to any one of claims 1 to 5, wherein an o-cresol concentration is 0.5 to 150.0 µg/L.

7. The whisky highball beverage according to any one of claims 1 to 6, wherein
a value of NP/HP/Alc is 0.1 to 40, where
"NP" denotes a content (vol%) of the non-peated whisky in terms of the ethanol concentration at 40 vol%,
"HP" denotes a content (vol%) of the heavily peated whisky in terms of the ethanol concentration at 40 vol%, and
"Alc" denotes the ethanol concentration (vol%) of the beverage.

8. A method for producing a whisky highball beverage, comprising:
preparing a heavily peated whisky in which a concentration of phenol contained is 0.1 mg/L or more, a concentration of guaiacol contained is 0.05 mg/L or more, and a concentration of o-cresol contained is 0.05 mg/L or more in terms of an ethanol concentration at 40 vol%;
preparing a non-peated whisky in which a concentration of phenol contained is less than 0.1 mg/L, a concentration of guaiacol contained is less than 0.05 mg/L, and a concentration of o-cresol contained is less than 0.05 mg/L in terms of the ethanol concentration at 40 vol%; and
mixing the heavily peated whisky and the non-peated whisky and diluting the obtained mixture so that an ethanol concentration is 4 vol% or less.
